# EUROPEAN PATENT SPECIFICATION

(11) **EP 0 563 192 B1**
(45) Date of publication and mention of the grant of the patent: **16.08.1995**
(21) Application number: 92901818.2
(22) Date of filing: 20.12.1991
(51) Int. Cl.: E05F 15/20

(54) **MONITORING APPARATUS**
KONTROLLGERÄT
APPAREIL DE CONTROLE

(30) Priority: 20.12.1990 SE 9004140
(43) Date of publication of application: 06.10.1993
(73) Proprietor: NOMAFA AB, S-301 80 Halmstad (SE)
(72) Inventor: LARSSON, Hakan, S-302 59 Halmstad (SE); ELIASSON, Jan-Erik, S-310 42 Haverdal (SE); Bernhardsson, Sture, S-280 64 Glimakra (SE); Nilsson, Göran, S-340 20 Liatorp (SE)
(74) Representative: Berglund, Gustav Arthur
(86) International application number: SE9100901
(87) International publication number: WO9211432

(56) References cited:
- WO-A-86/03249
- US-A- 4 272 711
- US-A- 4 529 920
- US-A- 4 594 538

## Description

The present invention generally relates to the monitoring of an a.c. motor in operation. More specifically, the invention provides an apparatus for monitoring or malfunction detection of an arrangement in which an a.c. motor is controlled by a frequency converter in order to produce a desired door movement.

The invention is intended to solve certain technical problems in the monitoring of asynchronous-motor control of doors, especially roll-up doors. The problems solved by the invention and the embodiments described below and illustrated in the accompanying drawings will therefore be discussed in connection with asynchronous-motor-controlled roll-up doors. However, the invention may generally be applied to all types of a.c. motor-operated doors.

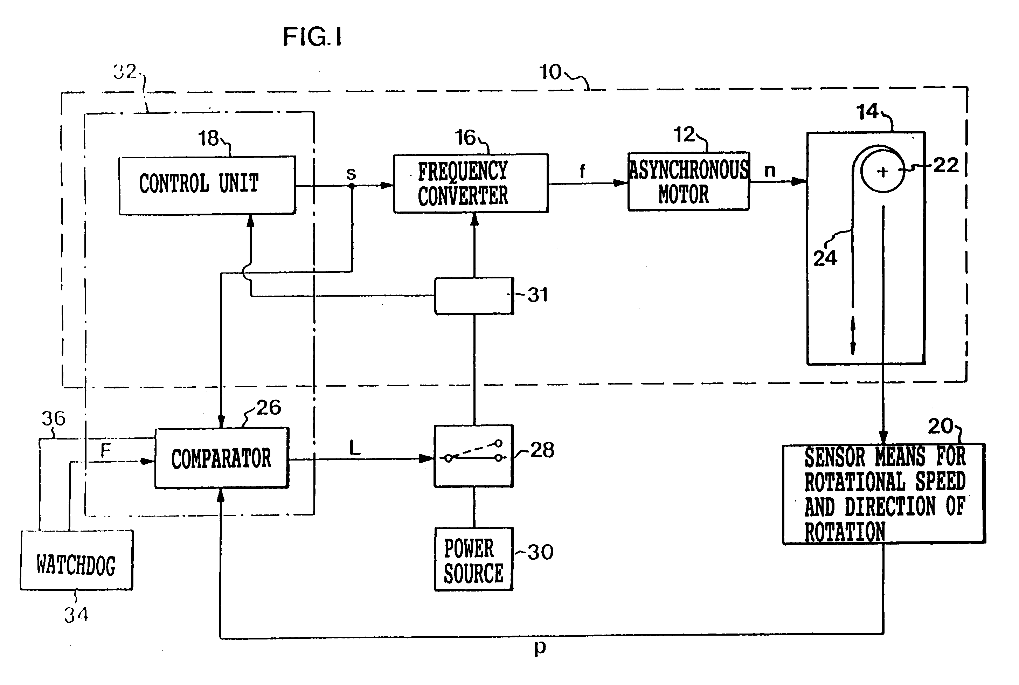

Reference is now made to Fig. 1 in the accompanying drawings, which schematically illustrates an arrangement 10, provided within a box drawn with broken lines, for asynchronous-motor operation of a roll-up door. The arrangement 10 includes an asynchronous motor 12, a roll-up door 14 operated by the asynchronous motor 12, a frequency converter 16 for supplying electric power to the asynchronous motor 12, and a control unit 18 for emitting, to the frequency converter 16, a control signal s corresponding to a desired door movement.

Assuming that the asynchronous motor 12 is designed as a three-phase machine, the control signal s from the control unit 18 to the frequency converter 16 generally indicates the frequency, the voltage and the phase sequence (i.e. the direction of rotation) for operating the asynchronous motor 12. The phase voltages which are indicated by the frequency converter 16, and whose frequency, phase sequence and voltage values thus are controlled by the signal s, are marked by a signal f to the motor 12.

Roll-up doors have conventionally been controlled at a constant opening and closing rate, and use has been made of simple contactors for producing a phase-sequence reversal for switching between the opening and the closing direction of the door, instead of a frequency converter. The reason for introducing a frequency converter is that it enables stepless control of the door opening and closing rate, involving smoother door movements at start and stop, as well as more rapid opening and closing of the door. Varying the above parameters (frequency, voltage and phase sequence) enables a steplessly variable speed control of the door.

The arrangement 10 schematically illustrated in Fig. 1 does, however, suffer from the inconvenience that it is fairly complicated to monitor the functions of all its component parts. The following malfunctions, among others, may arise in the illustrated arrangement 10:
(a) Elements of the door 14 continue to move despite the fact that the control signal s from the control unit 18 requests that the door movement be stopped.
(b) The transmission (at n) between the motor 12 and the door 14 jams, e.g. in an a.c. transmission or a belt transmission.
(c) The mechanism in the door 14 jams.
(d) There may be an incorrect connection in the phase sequence to the asynchronous motor 12, so that elements of the door 14 are driven in the opposite direction to the one requested by the control unit 18, involving risks of damage to objects and people passing through the door, as well as to the door itself.
(e) The control unit 18 receives incorrect information as to when a door leaf of the door 14 reaches its end positions.

One object of the invention is to solve the above monitoring problems. A specific object of the invention is to provide effective monitoring of the functions of all the components of an arrangement of the above type, so as to provide reliable control of the movements of the door.

To solve the above problems, the invention provides an apparatus for simultaneously monitoring the actuation of a door, comprising an a.c. motor, a door operated by the motor, a frequency converter for supplying electric a.c. power to the motor, and a control and signal-processing means designed to emit, to the frequency converter, a control signal corresponding to a desired movement of the door, said monitoring apparatus being characterised in that
a sensor means is arranged to continuously detect the actual movement of the door;
the control and signal-processing means is designed to continuously compare a first piece of information representing the desired door movement with a second piece of information received from the sensor means and representing the detected door movement, in order to emit an alarm signal should said first and second pieces of information differ to an unacceptable extent from one another;
a switch means is designed to block the supply of a.c. power to the motor in response to the alarm signal;
a sensing means is designed to sense whether the supply of a.c. power to the a.c. motor is blocked; and
the control and signal-processing means is designed to repeatedly emit the alarm signal as a fictitious alarm signal to the switch means as well as to receive, from the sensing means, information on whether the supply of a.c. power to the motor is blocked in response to the fictitious alarm signal, in order to establish a possible malfunction of the switch means.

The apparatus according to the invention detects in a particularly effective, inexpensive and reliable manner each and every malfunction in the arrangement, regardless of type and place. Especially, the alarm signal is generated regardless of whether the above difference is caused by a malfunction or incorrect connection of the control and signal-processing means, the frequency converter, the a.c. motor or the sensor means, or malfunction or overloading of the door.

The monitoring apparatus according to the invention is in addition self-monitoring, since it can detect, apart from the above-mentioned malfunctions (a)-(e), malfunction or incorrect connection of the sensor means. Should the sensor means be designed to detect whether the door leaf of a roll-up door is moving upwards or downwards and there is something wrong with this detection, caused perhaps by malfunction in the sensor means proper, by the sensor means having been incorrectly mounted on the door, or by the sensor means being incorrectly connected to the control and signal-processing means, the alarm signal is generated at all events.

By 'continuously' is here meant that the monitoring is performed repeatedly and automatically, preferably at comparatively frequent intervals, optionally without interruption. Thus, the first and the second pieces of information can also be digital.

According to the invention, a switch means is arranged, e.g. between an outer power supply source and the frequency converter, to block the supply of a.c. power to the motor in response to the alarm signal.

To monitor also the function of the switch means, which e.g. may be a relay and whose satisfactory function is of vital importance to the total security, the monitoring apparatus according to the invention is further characterised by the provision of a means, e.g. an optocoupler, which senses whether the supply of a.c. power to the motor is blocked, said device being so designed that the malfunction signal is generated intentionally and automatically, e.g. once for every door cycle, e.g. in an end position, representing a fictitious malfunction state. Should there be a malfunction in the switch means which therefore does not block the power as it should have done if intact, this is detected by the optocoupler. An output signal from the optocoupler can then be supplied to the control means to interrupt the function.

As indicated above, the alarm signal is emitted if the first piece of information differs too much from the second piece of information emitted by the sensor means. In one embodiment of the invention, the a.c. motor is an asynchronous motor, and the above difference is detected by sensing the slip of the asynchronous motor. When the asynchronous motor in operation is loaded by the door, there is an expected slip. If the motor, the door or the transmission is jammed or overloaded, such a malfunction state can be detected as an undue increase of the slip. To this end, the sensor means can be adapted to measure a rotational speed in the driven system and compare this speed with the synchronous speed of the asynchronous motor.

Preferred embodiments of the invention are recited in the appended claims.

The invention will be described in more detail below with reference to an exemplifying embodiment and the accompanying drawings, in which
Fig. 1 is a schematic block diagram illustrating a monitoring apparatus according to the invention which is applied to an asynchronous-motor-operated roll-up door, and
Fig. 2 is a more detailed circuit diagram showing parts of the monitoring apparatus in Fig. 1 and illustrating the function of the invention.

The arrangement 10 (the asynchronous motor 12, the roll-up door 14, the frequency converter 16 and the control unit 18) shown schematically within the broken-line box in Fig. 1 has already been described above. The arrangement 10 has been supplemented with a sensor means, here in the form of a pulse generator 20 which is operatively connected to a winding roller 22 for a door leaf 24 of the roll-up door 14. The pulse generator 20 is of two-channel type so as to be able to detect both the rotational speed and the direction of rotation of the winding roller 22. Information to this effect is continuously emitted by the pulse generator and is designated p.

A comparator means 26 receives the information p from the pulse generator 20, as well as information from the control unit 18 corresponding to the control signal s to the frequency converter. The comparator means 26 compares these pieces of information to verify that the information p is in keeping with the control signal s. Should the difference between s and p be unacceptable, an alarm signal L is emitted. The alarm signal L may, for instance, be emitted if one or more of the above malfunctions (a)-(e) arise.

There is further provided a switch means 28 which is connected between an outer a.c. power source 30 and the frequency converter 16 to interrupt the power supply to the frequency converter, and consequently to the motor 12, when the alarm signal L is emitted. This automatic stop function can optionally be combined with a delay function, so that the door 14 is not stopped until it has reached an end position, in which it for instance is completely open or completely closed. However, the alarm signal may also be employed otherwise, e.g. to produce a visual alarm signal.

It should be emphasised that there is no conventional feed-back control. An unwanted difference between s and p thus does not lead to s being automatically modified by the control unit in such a manner that this difference is reduced. Should, for instance, the speed of the door leaf 24 begin to decrease owing to overloading somewhere in the system, this will not cause the control unit 18 to modify the control signal s in such a manner that the motor speed n is increased. According to the invention, the unacceptable difference between s and p is instead seen as an indication of a malfunction in the system. It would, however, be conceivable to combine the apparatus according to the invention with a feed-back control, in which case a holding function is applied to the alarm signal so that this will continue also if the difference between s and p is eliminated by the control.

The reference number 31 designates a sensing means in the form of an optocoupler for monitoring the function of the switch means 28. Thus, the optocoupler detects whether the switch means 28 supplies power to the frequency converter 16. The apparatus is so designed that the malfunction signal L, which respresents a fictitious malfunction state, is consciously and automatically generated once for each door cycle. If the switch means 28 does not interrupt the power supply from the power source 30 to the frequency converter 16 owing to a malfunction, this is detected by the optocoupler 31 which forwards this information to the control unit 18. In response to the thus-detected malfunction in the switch means 28, the control unit 18 is able to interrupt the function of the entire apparatus.

Preferably, the comparator means 26 and the control unit 18 are part of one and the same CPU or microprocessor which is schematically indicated in Fig. 1 as a dash-dot box 32. The function of the CPU 32 can, in known manner, be monitored by means of a so-called watchdog, which is schematically illustrated at 34. The software of the CPU 32 is such that a watchdog signal 36 is repeatedly emitted, e.g. every tenth millisecond, from the CPU 32 as long as this is operating properly. The watchdog signal 36 is detected by the watchdog 34 and if there is no such signal, the watchdog 34 emits a malfunction signal F to the CPU, which then interrupts the ongoing function to try and start anew.

As to the alarm signal L, the apparatus described above can optionally be modified in such a manner that different alarm signals are emitted for different types of malfunctions, e.g. as visual information on a display. Thus, a first alarm signal can indicate error of direction, i.e. if the motor or the door is moving in the wrong direction compared with the control signal s, a second alarm signal can indicate lack of pulses in the signal p despite the movement requested by the control signal s, and a third alarm signal can indicate that the slip is too pronounced, i.e. that the torque is too high. How these three alarm signals are deduced from the signal p will be obvious to the expert, and will not be described in more detail here.

The pulse generator is mounted adjacent to the door roller, as illustrated at 22 in Fig. 1, or adjacent to the motor 12 operating the roller 22. The pulse generator preferably counts parts of turns of the door roller 22 and the motor 12, respectively. The pulses generated by the pulse generator are counted during the movement of the door and, as indicated above, the pulse generator is preferably of two-channel type so as to emit pulses with a first mutual phase relationship when the door leaf is moving e.g. upwards, and pulses with a second mutual phase relationship when the door leaf is moving downwards. The pulse generator can also include more channels, e.g. for emitting inverted pulses so as to achieve an improved disturbance sensitivity.

The pulse count thus increases or decreases depending on the direction of motion of the door leaf. At every moment, the current pulse count is translated by the CPU into the current position of the door leaf (e.g. completely open, completely closed or somewhere between).

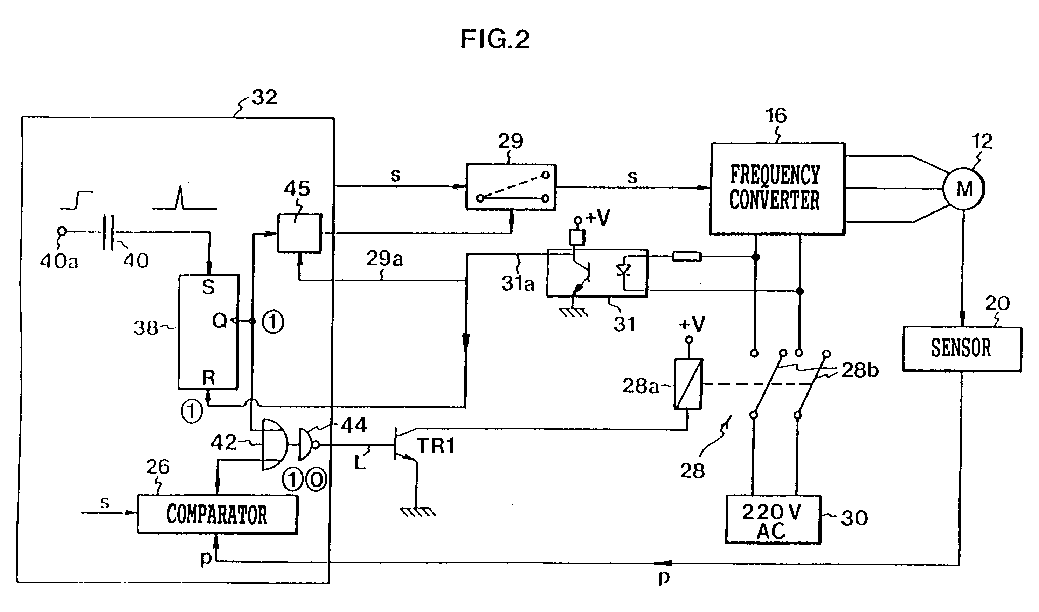

The overall monitoring function of the invention has now been described in general terms with reference to Fig. 1. The monitoring function of the invention bearing upon the switch means 28 will be described in more detail below with reference to Fig. 2, which schematically illustrates this specific function of the apparatus.

In Fig. 2, the control unit 18 and the comparator means 26 from Fig. 1 form part of a CPU or microprocessor 32. To illustrate the function of the invention more clearly, the comparator function of the CPU 32 is, however, marked by a box 26, as in Fig. 1, in spite of the fact that this function is in practice implemented by software. Also other components indicated within the dash-dot box 32 in Fig. 2 may be implemented by software.

The CPU 32 in Fig. 2 operates as a combined control and signal-processing means and is designed to repeatedly emit the alarm signal 1 as a fictitious alarm signal to the switch means 28. The generation of such a fictitious alarm signal is achieved by means of an SR-latch 38, a capacitor 40, an OR-gate 42 and an inverter 44. At one terminal 40a, the capacitor 40 receives a signal deduced from the information p, indicating that the door 14 is standing still in a given position, preferably a desired open position. The stepped signal supplied to the terminal 40a is, by the capacitor 40, converted into a pulse which is applied to the S input of the SR-latch. This is performed repeatedly and automatically once for every door cycle.

When the SR-latch receives the pulse signal at its S input, its Q output goes high, so that the output of the OR-gate 42 also goes high and the output of the inverter 44 thus goes low. A transistor TR1 connected to the output of the inverter 44 thus receives a low signal at its base, whereby a relay coil 28a of the switch means 28 is rendered dead and, if the relay works, breaks the circuit through the contactors 28b. Thus, the supply of a.c. power from the a.c. power source 30 to the frequency converter 16 is interrupted, which is detected by the optocoupler 31. As a result, a positive voltage signal to the reset input R of the SR-latch is emitted at the output of the optocoupler 31, whereby the SR-latch is reset and the Q output again goes low, so that the fictitious alarm signal ceases and the switch means 28 again permits power supply to the frequency converter 16.

Should there be a malfunction in the switch means 28, e.g. if the contactors 28b have stuck in closed position, the fictitious alarm signal will not be able to interrupt the power supply from the source 30 to the frequency converter 16. The output signal of the optocoupler 31 will then be on a low voltage level, and the SR-latch 38 will not be reset. The Q output will therefore remain on a high level, and the fictitious alarm signal will continue but now as a 'real' alarm signal.

When there is such a malfunction in the switch means 28, the supply of a.c. current to the motor 12 is interrupted with the aid of an additional switch means, designated 29 in Fig. 2, which is connected between the CPU 32 and the frequency converter 16 to allow or block the passage of the control signal s.

This additional switch means 29 is controlled by a signal 29a from a unit 45 (schematically indicated) which receives the Q signal from the SR-latch 38, as well as the output signal from the optocoupler 31. The unit 45 functions in such a manner that the switch means 29 will only let through the s signal if the optocoupler 31 detects that there is a power supply from the source 30 to the frequency converter 16, and that the Q output of the SR-latch 38 simultaneously is low. If the above malfunction of the switch means 28 should occur and be detected by the generation of the fictitious alarm signal, the Q output of the SR-latch 38 will thus remain at high level, whereby the unit 45 will continue to block the switch means 29, in spite of the fact that the optocoupler 31 indicates that there is a power supply from the source 30 to the frequency converter 16.

Fig. 2 further illustrates how the OR-gate 42 can generate a 'real' alarm signal by receiving an output signal from the comparator means 26 which compares the signals s and p, as has been described above with reference to Fig. 1.

In Fig. 2, the switch means 28 is connected between the a.c. power supply source 30 and the frequency converter 16. The switch means 28 can however be connected elsewhere, e.g. between the frequency converter 16 and the motor 12, or, like the switch means 29, between the CPU 32 and the frequency converter 16. Further, the switch means 28 may be designed otherwise than above. For instance, the switch means 28 may be a rectifier connected between the frequency converter 16 and the motor 12 to lock, by a rectifiying function, the a.c. power supply to the motor 12. The switch means 28 may thus be optionally designed, on condition that it is able to block the a.c. power supply to the motor.

In the foregoing, the invention has been described with reference to embodiments and preferred modifications, but it will be appreciated that several variants and additions are conceivable within the scope of the invention as defined in the appended claims.

## Claims

1. Apparatus for monitoring the actuation of a door, comprising an a.c. motor (12), a door (14) operated by the motor (12), a frequency converter (16) for supplying electric a.c. power to the motor (12), and a control and signal-processing means (32) designed to emit, to the frequency converter (16), a control signal (s) corresponding to a desired movement of the door (14), **characterised** in that
a sensor means (20) is arranged to continuously detect the actual movement of the door (14);
the control and signal-processing means (32) is designed to continuously compare a first piece of information (s) representing the desired door movement with a second piece of information (p) received from the sensor means (20) and representing the detected door movement, in order to emit an alarm signal (L) should said first and second pieces of information (s, p) differ to an unacceptable extent from one another;
a switch means (28) is designed to block the supply of a.c. power to the motor (12) in response to the alarm signal (L);
a sensing means (31) is designed to sense whether the supply of a.c. power to the a.c. motor (12) is blocked; and
the control and signal-processing means (32) is designed to repeatedly emit the alarm signal (L) as a fictitious alarm signal to the switch means (28) as well as to receive, from the sensing means (31), information on whether the supply of a.c. power to the motor (12) is blocked in response to the fictitious alarm signal (L), in order to establish a possible malfunction of the switch means (28).

2. The apparatus of claim 1, **characterised** in that the switch means (28) is connected between an outer power-supply source (30) and the frequency converter (16).

3. The apparatus of any one of the preceding claims, **characterised** in that the control and signal-processing means (32) is designed, when emitting the fictitious alarm signal (L), to retain the fictitious alarm signal until the sensing means (31) emits information indicating that the supply of a.c. power to the motor (12) is blocked.

4. The apparatus of any one of the preceding claims, **characterised** in that an additional switch means (29), which is separate from the first-mentioned switch means, is designed to block the supply of a.c. power to the motor (12) if the information from the sensing means (31) indicates that the supply of a.c. power to the motor (12) is not blocked despite the presence of the fictitious alarm signal (L).

5. The apparatus of claim 4, **characterised** in that the additional switch means (29) is connected between the control and signal-processing means (32) and the frequency converter (26), so as to enable blocking of the control signal (s) to the frequency converter (16).

6. The apparatus of any one of the preceding claims, **characterised** in that the control and signal-processing means (32) is designed to emit the fictitious alarm signal (L) when the second piece of information (p) from the sensor means (20) indicates that the door (14) is standing still in a given position.

7. The apparatus of claim 6, **characterised** in that the door (14) is open in said given position.

8. The apparatus of any one of the preceding claims, **characterised** in that the second piece of information (p) emitted from the sensor means (20) contains information on both the speed and the direction of motion of a door leaf (24) of the door (14).

9. The apparatus of claim 8, **characterised** in that the sensor means (20) includes a multi-channel pulse generator which is operatively connected to the door leaf (24).

10. The apparatus of any one of the preceding claims, **characterised** in that the sensing means (31) includes an optocoupler.

11. The apparatus of any one of the preceding claims, **characterised** in that the control and signal-processing means (32) includes a microcomputer.

## Patentansprüche

1. Vorichtung zum Überwachen der Betätigung eines Tores, umfassend: einen Wechselstrommotor (12), ein von dem Motor (12) betätigtes Tor (14), einen Frequenzumsetzer (16), der dem Motor (12) elektrische Wechselstromleistung zuführt, und eine Steuer- und Signalverarbeitungseinrichtung (32), die bestimmt ist, ein Steuersignal (s), das einer gewünschten Bewegung des Tores (14) entspricht, an den Frequenzumsetzer (16) auszugeben, dadurch gekennzeichnet, daß
eine Sensoreinrichtung (20) angeordnet ist, um fortlaufend die tatsächliche Bewegung des Tores (14) zu ermitteln;
die Steuer- und Signalverarbeitungseinrichtung (32) ausersehen ist, um einen ersten Teil von Information (s), der die gewünschte Torbewegung darstellt, mit einem zweiten Teil von Information (p), der von der Sensoreinrichtung (20) empfangen wird und die ermittelte Torbewegung darstellt, kontinuierlich zu vergleichen, um ein Alarmsignal (L) auszugeben, sollten der erste und zweite Teil von Information (s, p) in einem unannehmbaren Ausmaß voneinander abweichen;
eine Schaltereinrichtung (28) bestimmt ist, um als Reaktion auf das Alarmsignal (L) die Zufuhr von Wechselstromleistung an den Motor (12) zu sperren;
eine Abtasteinrichtung (31) bestimmt ist, um zu ermitteln, ob die Zufuhr von Wechselstromleistung an den Wechselstrommotor (12) gesperrt ist, und
die Steuer- und Signalverarbeitungseinrichtung (32) ausersehen ist, um sowohl das Alarmsignal (L) als ein fiktives Alarmsignal wiederholt an die Schaltereinrichtung (28) auszusenden als auch von der Abtasteinrichtung (31) Information darüber zu empfangen, ob die Zufuhr von Wechselstromleistung an den Motor (12) als Reaktion auf das fiktive Alarmsignal (L) gesperrt wird, um ein mögliches Versagen der Schaltereinrichtung (28) nachzuweisen.

2. Vorrichtung nach Anspruch 1, dadurch gekennzeichnet, daß die Schaltereinrichtung (28) zwischen eine äußere Stromversorgungsquelle (30) und den Frequenzumsetzer (16) geschaltet ist.

3. Vorrichtung nach einem der vorangehenden Ansprüche, dadurch gekennzeichnet, daß die Steuer- und Signalverarbeitungseinrichtung (32) ausgelegt ist, um, wenn sie das fiktive Alarmsignal (L) ausgibt, das fiktive Alarmsignal beizubehalten, bis die Abtasteinrichtung (31) Information ausgibt, die anzeigt, daß die Zufuhr von Wechselstromleistung an den Motor (12) gesperrt wird.

4. Vorrichtung nach einem der vorangehenden Ansprüche, dadurch gekennzeichnet, daß eine weitere Schaltereinrichtung (29), die von der ersterwähnten Schaltereinrichtung getrennt ist, ausersehen ist, die Zufuhr von Wechselstromleistung an den Motor (12) zu sperren, wenn die Information von der Abtasteinrichtung (31) anzeigt, daß die Zufuhr von Wechselstromleistung an den Motor (12) trotz der Anwesenheit des fiktiven Alarmsignals (L) nicht gesperrt wird.

5. Vorrichtung nach Anspruch 4, dadurch gekennzeichnet, daß die weitere Schaltereinrichtung (29) zwischen die Steuer- und Signalverarbeitungseinrichtung (32) und den Frequenzumsetzer (16) geschaltet ist, um ein Sperren des Steuersignals (s) an den Frequenzumsetzer (16) zu ermöglichen.

6. Vorrichtung nach einem der vorangehenden Ansprüche, dadurch gekennzeichnet, daß die Steuer- und Signalverarbeitungseinrichtung (32) ausgelegt ist, um das fiktive Alarmsignal (L) auszugeben, wenn der zweite Teil von Information (p) von der Sensoreinrichtung (20) anzeigt, daß das Tor (14) in einer gegebenen Stellung stillsteht.

7. Vorrichtung nach Anspruch 6, dadurch gekennzeichnet, daß das Tor (14) in der gegebenen Stellung offen ist.

8. Vorrichtung nach einem der vorangehenden Ansprüche, dadurch gekennzeichnet, daß der von der Sensoreinrichtung (20) ausgegebene zweite Teil von Information (p) Information über sowohl die Geschwindigkeit als auch die Richtung der Bewegung eines Torblattes (24) des Tores (14) enthält.

9. Vorrichtung nach Anspruch 8, dadurch gekennzeichnet, daß die Sensoreinrichtung (20) einen Mehrkanal-Impulserzeuger umfaßt, der mit dem Torblatt (24) betriebsfähig verbunden ist,

10. Vorrichtung nach einem der vorangehenden Ansprüche, dadurch gekennzeichnet, daß die Abatsteinrichtung (31) einen Optokoppler umfaßt.

11. Vorrichtung nach einem der vorangehenden Ansprüche, dadurch gekennzeichnet, daß die Steuer- und Signalverarbeitungseinrichtung (32) einen Mikrocomputer umfaßt.

## Revendications

1. Appareil pour contrôler l'actionnement d'une porte, comprenant un moteur à courant alternatif (12) une porte (14) actionnée par le moteur (12), un convertisseur de fréquence (16) pour fournir l'alimentation électrique de courant alternatif au moteur (12), et un dispositif de commande et de traitement de signal (32) conçu pour émettre, au convertisseur de fréquence (16) un signal de commande (s) correspondant à un mouvement voulu de la porte (14), caractérisé en ce que
un dispositif capteur (20) est disposé pour détecter de façon continue le mouvement réel de la porte (14) ;
le dispositif de commande et de traitement de signal (32) est conçu pour comparer de façon continue un premier élément d'informations (s) représentant le mouvement de la porte voulu avec un second élément d'informations (p) reçu du dispositif capteur (20) et représentant le mouvement de la porte détecté, afin d'émettre un signal d'alarme (L) si lesdits premier et second éléments d'informations (s, p) diffèrent l'un de l'autre au point que cela est inacceptable;
un dispositif de commutation (28) est conçu pour bloquer l'alimentation électrique de courant alternatif au moteur (12) en réponse au signal d'alarme (L) ;
un dispositif de détection (31) est conçu pour détecter si l'alimentation électrique de courant alternatif au moteur à courant alternatif (12) est bloquée ; et
le dispositif de commande et de traitement de signal (32) est conçu pour émettre de façon répétitive le signal d'alarme (L) comme un signal d'alarme fictif au dispositif de commutation (28) afin de recevoir, du dispositif de détection (31), des informations sur si l'alimentation électrique de courant alternatif au moteur (12) est bloquée en réponse au signal d'alarme fictif (L), afin de mettre en évidence un fonctionnement défectueux possible du dispositif de commutation (28).

2. Appareil selon la revendication 1, caractérisé en ce que ledit dispositif de commutation (28) est relié entre une source d'alimentation électrique externe (30) et le convertisseur de fréquence (16).

3. Appareil selon l'une quelconque des revendications précédentes, caractérisé en ce que le dispositif de commande et de traitement de signal (32) est conçu, lors de l'émission d'un signal d'alarme fictif (L), pour retenir le signal d'alarme fictif jusqu'à ce que le dispositif de détection (31) émette des informations indiquant que l'alimentation électrique de courant alternatif au moteur (12) est bloquée.

4. Appareil selon l'une quelconque des revendications précédentes, caractérisé en ce que le dispositif de commutation supplémentaire (29), qui est séparé du dispositif de commutation mentionné en premier, est conçu pour bloquer l'alimentation électrique de courant alternatif au moteur (12) si les informations du dispositif de détection (31) indiquent que la fourniture de l'alimentation de courant alternatif au moteur (12) n'est pas bloquée en dépit de la présence du signal d'alarme fictif (L).

5. Appareil selon la revendication 4, caractérisé en ce que le dispositif de commutation supplémentaire (29) est relié entre le dispositif de commande et de traitement de signal (32) et le convertisseur de fréquence (26), afin de permettre un blocage du signal de commande (s) au convertisseur de fréquence (16).

6. Appareil selon l'une quelconque des revendications précédentes, caractérisé en ce que le dispositif de commande et de traitement de signal (32) est conçu pour émettre un signal d'alarme fictif (L) lorsque le second élément d'informations (p) du dispositif capteur (20) indique que la porte (14) est encore dans une position donnée.

7. Appareil selon la revendication 6, caractérisé en ce que la porte (14) est ouverte dans ladite position donnée.

8. Appareil selon l'une quelconque des revendications précédentes, caractérisé en ce que le second élément d'informations (p) émis par le dispositif capteur (20) contient des informations à la fois sur la vitesse et la direction de déplacement d'un battant de porte (24) de la porte (14).

9. Appareil selon la revendication 8, caractérisé en ce que le dispositif capteur (20) comprend un générateur d'impulsions multi-canaux qui est relié de façon fonctionnelle au battant de porte (24).

10. Appareil selon l'une quelconque des revendications précédentes, caractérisé en ce que ledit dispositif de détection (31) comprend un coupleur optique.

11. Appareil selon l'une quelconque des revendications précédentes, caractérisé en ce que le dispositif de commande et de traitement de signal (32) comprend un micro-ordinateur.
